# EUROPEAN PATENT APPLICATION

(11) **EP 2 634 162 A1**
(43) Date of publication of application: **04.09.2013**
(21) Application number: 13169465.5
(22) Date of filing: 14.05.2008
(51) Int. Cl.: C04B 41/00, C04B 41/48, C08F 220/24

(54) **Water-repellent oil-repellent antifouling agent having good solubility in solvent**

(30) Priority: 15.05.2007 JP 2007128854
(62) Divisional of application: 08752728.9
(71) Applicant: DAIKIN INDUSTRIES, LTD., Osaka-shi, Osaka 530-8323 (JP)
(72) Inventor: Ueda, Akihiko, Osaka 566-8585 (JP); Maeda, Masahiko, Osaka 566-8585 (JP); Masutani, Tetsuya, Osaka 566-8585 (JP)
(74) Representative: HOFFMANN EITLE

(57) **Abstract**

Disclosed is a water-repellent oil-repellent antifouling agent containing a fluorine-containing polymer for a treatment for providing water repellency, oil repellency and antifouling property. The fluorine-containing polymer has a repeating unit (A) derived from a fluorine-containing acrylate monomer, and a repeating unit (B) derived from at least one non-fluorine acrylate monomer selected from the group consisting of a monomer (B1) having a cyclic hydrocarbon group and a monomer (B2) having a short chain hydrocarbon group. This water-repellent oil-repellent antifouling agent has good solubility in solvents, and exhibits excellent effects on various bases, especially on masonries.

## Description

### TECHNICAL FIELD

The present invention relates to a fluorine-containing polymer for water-repellent oil-repellent antifouling agent having good solubility in solvent, particularly a fluorine-containing polymer for treating a masonry, a treatment agent, a treatment method and a treated substrate, which polymer has an excellent effect for treating a masonry.

### BACKGROUND ART

It is known that water- and oil-repellency and soil resistant property (i.e. antifouling property) can be imparted to a substrate by treating the substrate with a compound having fluoroalkyl group (Rf group), which substrate is, for example, a masonry such as stone material, glass, ceramic products, fabric products, paper, wood, leather, metal and plastics. Such a treatment is practically used.
For example, in a surface treatment of a masonry such as stone material, the below-mentioned methods for imparting water- and oil-repellency and soil resistant property have been studied.

For example, JP-A-57-23662 describes that an acrylate having a Rf group is coated on a concrete or a stone to form a protective film. Each of JP-A-07-109317 and WO2004/041880 discloses a treatment agent comprising a fluorine-containing copolymer comprising a monomer having a Rf group and a silicon-containing vinyl monomer.
JP-A-11-507687 discloses a masonry-treatment agent comprising a water-soluble polymer having a Rf group, a carboxyl group, an oxyalkylene group and a silyl group. EP1225187 discloses the treatment of ceramics with a polymer having chain transfer ends containing silyl group, wherein the polymer comprises a Rf group-containing monomer, a fluorine-free monomer and a silyl group-containing monomer. WO2005/097850 discloses the treatment using a polymer comprising a fluorine-containing monomer, a monomer having an acidic group and a monomer having a hydrophobic group. JP-A-2000-264757 proposes that a masonry is treated with a phosphate ester having a Rf group.

These treatment agents, however, do not have both of sufficient water repellency and sufficient oil repellency and cannot impart sufficient soil resistance required for a masonry-treatment agent.
Further, these treatment agents substantially comprise a Rf group having at least 8 carbon atoms and treatment agents comprising a short Rf group having at most 6 carbon atoms fail to show sufficient effects.
WO2004/108779 discloses a treatment agent derived from a polymer comprising a fluorine-containing monomer which is substituted with, for example, a fluorine atom or a chlorine atom at the alpha-position. Such a polymer has an inferior copolymerizability caused by an influence to a polymerization rate due to the alpha-substitution, so that sufficient effects are not obtained.
Representative examples of the fluorine-free monomer which copolymerizes with a monomer having a Rf group include a monomer having a long chain hydrocarbon group, for example, a monomer having a stearyl group. Such monomer contributes to the solubility in a petroleum-based solvent, on the other hand, the copolymer derived from the monomers is insoluble at a low temperature due to its crystallinity.

Described below are the environmental problems raised by perfluorooctanoic acid (PFOA). The results of the latest researches [a report of the Environmental Protection Agency (EPA), "PRELIMINARY RISK ASSESSMENT OF THE DEVELOPMENTAL TOXICITY ASSOCIATED WITH EXPOSURE TO PERFLUOROOCTANOIC ACID AND ITS SALTS" (http://www.epa.gov/opptintr/pfoa/pfoara.pdf)] have taught that PFOA (perfluorooctanoic acid), one of long chain fluoroalkyl compounds, is proved to have a danger to burden the environment. Under such a situation, EPA announced on April 14, 2003 that the scientific investigation on PFOA should be more intensively executed.
On the other hand, the Federal Register (FR Vol.68, No.73/April 16, 2003 [FRL-7303-8], http://www.epa.gov/opptintr/pfoa/pfoafr.pdf), EPA Environmental News FOR RELEASE: MONDAY APRIL 14, 2003 EPA INTENSIFIES SCIENTIFIC INVESTIGATION OF A CHEMICAL PROCESSING AID (http://www.epa.gov/opptintr/pfoa/pfoaprs.pdf) and EPA OPPT FACT SHEET April 14, 2003 (http://www.epa.gov/opptintr/pfoa/pfoafacts.pdf) have published that telomers have a possibility to produce PFOA when decomposed or metabolized (herein, the telomer means a long chain fluoroalkyl group), and also that telomers have been widely used in foam fire extinguishers, care products, washing materials, carpets, textiles, paper, leather, etc., in order to impart water- and oil- repellency and soil resistant property to them.

Patent Document 1: JP-A-57-23662,
Patent Document 2: JP-A-7-109317,
Patent Document 3: WO2004/041880,
Patent Document 4: JP-A-11-507687,
Patent Document 5: EP1225187,
Patent Document 6: WO2005/097850,
Patent Document 7: JP-A-2000-264757, and
Patent Document 8: WO2004/108779.

### DISCLOSURE OF THE INVENTION

### Problems to be Solved by the Invention

An object of the present invention is to provide a water-repellent oil-repellent soil-resistant agent which has an excellent solubility in solvent, particularly which shows an excellent effects for a masonry.

### Means for Solving the Problems

The present invention relates to a fluorine-containing polymer for water-repellent oil-repellent soil resistant treatment, particularly to a fluorine-containing polymer for a masonry treatment, comprising
(A) repeating units derived from a fluorine-containing acrylate monomer; and
(B) repeating units derived from at least one fluorine-free acrylate monomer selected from the group consisting of (B1) a monomer having a cyclic hydrocarbon group and (B2) a monomer having a short chain hydrocarbon group.
In the present invention, the term "acrylate monomer" includes not only an acrylate having a hydrogen atom at an alpha-position, but also an acrylate in which the hydrogen atom at the alpha-position is substituted with a substituent group such as a methyl group or a halogen atom.

In the present invention, the fluorine-containing acrylate monomer (A) preferably comprises;
(i) at least one fluorine-containing group selected from the group consisting of a fluoroalkyl group, a fluoroalkenyl group, and a fluoroether group (hereinafter referred to as "fluorine-containing group"), and
(ii) an acrylate group represented by the formula:

   -O-CO-CX=CH₂

   wherein X is a hydrogen atom, a methyl group, a fluorine atom, a chlorine atom, a bromine atom, an iodine atom, a CFX¹X² group (in which X¹ and X² each is a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group.

### EFFECTS OF THE INVENTION

The present invention can provide a water-repellent oil-repellent soil-resistant agent having a good solubility in solvent, which agent particularly can impart excellent water- and oil-repellency and soil resistant property (i.e. antifouling property) to a masonry by treating with the present soil-resistant agent.

### MODES FOR CARRYING OUT THE INVENTION

The fluorine-containing polymer of the present invention comprises repeating units derived from each of monomers (A) and (B). The monomer (B) may be either one or both of the monomer (B1) and the monomer (B2).
In the present fluorine-containing polymer, examples of the fluorine-containing monomer (A) include a monomer having: at least one fluorine-containing group selected from the group consisting of a fluoroalkyl group, a fluoroalkenyl group and a fluoroether group (hereinafter referred to as "fluorine-containing group") and
an unsaturated group represented by the formula:

-O-CO-CX=CH₂

wherein X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group.

The acrylate monomer having the fluorine-containing group is, for example, represented by the formula: 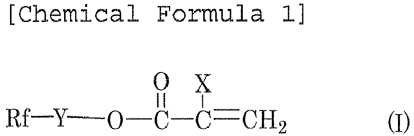 wherein
X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group;
Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂-group (in which R¹ is an alkyl group having 1 to 4 carbon atoms) or a -CH₂CH(OY¹)CH₂- group (in which Y¹ is a hydrogen atom or an acetyl group); and
Rf is a linear or branched fluoroalkyl group having 1 to 7 carbon atoms, a fluoroalkenyl group having 2 to 7 carbon atoms, or a fluoroether group having totally 1 to 200 repeating units selected from the group consisting of repeating units: -C₃F₆O-, -C₂F₄O- and -CF₂O-].

In the Formula (I), when the Rf group is the fluoroalkyl group, it is preferably a perfluoroalkyl group. Examples of the Rf group include -CF₃, -CF₂CF₃, -CF₂CF₂CF₃, - CF(CF₃)₂, -CF₂CF₂CF₂CF₃, -CF₂CF(CF₃)₂, -C(CF₃)₃, -(CF₂)₄CF₃,-(CF₂)₂CF(CF₃)₂, -CF₂C(CF₃)₃, -CF(CF₃)CF₂CF₂CF₃, -(CF₂)₅CF₃, - (CF₂)₃CF(CF₃)_{2,} - (CF₂)₄CF(CF₃)_{2,} - -(CF₂)₂H, -C_{F2}CFHCF₃H, (CF₂)₄H and -(CF₂)₆H. When the Rf group is the fluoroalkyl group, the Rf group preferably has 1 to 7, for example, 2 to 6, particularly 4 to 6, more particularly 6 carbon atoms in view of the PFOA and the function thereof as mentioned above.
When the Rf group is the fluoroalkenyl group, it is preferably a perfluoroalkenyl group. Examples of the Rf group include -CF=CF(CF3), CF=C(CF₃)₂, -CF=C(CF₃) (CF₂CF₂CF₃), -CF=C(CF₃)(CF(CF₃)₂), -C(CF₃)=CF(CF(CF₃)₂) and -C(CF₂CF₃)=C(CF₃)₂. When the Rf group is the fluoroalkenyl group, the Rf group preferably has 2 to 7, particularly 3 to 6, more particularly 6 carbon atoms.

When the Rf group is the fluoroether group, the fluoroether group has at least one repeating unit selected from the group of -C₃F₆O-, -C₂F₄O- and -CF₂O- (a oxyperfluoroalkylene group). The -C₃F₆O- group is -CF₂CF₂CF₂O-or -CF₂C(CF₃)FO-. The -C₂F₄O- group is generally -CF₂CF₂O-. The total number of the oxyperfluoroalkylene group is from 1 to 200, for example, from 1 to 100, particularly from 5 to 50. The fluoroalkylene group has an end group which directly bonds to the oxyperfluoroalkylene repeated unit. Examples of the end group include a hydrogen atom, a halogen atom (such as a fluorine atom), an alcohol group (such as HOCH₂-), an epoxy group (such as 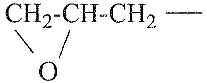 ), an amine group (such as H₂N-), a carboxylic group (such as HOOC-), an acid halide group (such as F(O=)C-), a chloromethyl group (such as ClH₂C-). The fluoroether group may have a fluoroalkylene group, in particular a perfluoroalkylene group having 1 to 10 carbon atoms, in addition to the oxyperfluoroalkylene repeating unit(s) and the end group. Examples of the fluoroalkylene group having 1 to 10 carbon atoms are -CF₂- and -CF₂CF₂-.

Examples of the fluoroether group (particularly the perfluoroether group), which are the representatives of the Rf group, include the followings:
F-(CF₂CF₂CF₂O)ₙ-CF₂CF₂- (n is from 1 to 200),
F-(CF₂(CF₃)FO)ₙ-CF₂CF₂- (n is from 1 to 200),
F-(CF₂(CF₃)FO)ₙ-(CF₂O)ₘ-CF₂CF₂- (total of n and m is from 1 to 200), and
F-(CF₂CF₂O)ₙ-(CF₂O)ₘ-CF₂CF₂- (total of n and m is from 1 to 200).

Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a-CH₂CH₂N(R¹)SO₂- group (in which R¹ is an alkyl group having 1 to 4 carbon atoms) or a -CH₂CH(OY¹)CH₂- group (in which Y¹ is a hydrogen atom or an acetyl group). The aliphatic group is preferably an alkylene group (having particularly 1 to 4, for example, 1 or 2 carbon atoms). The aromatic, cycloaliphatic and aralkyl groups may be substituted or unsubstituted.

Examples of the above fluorine-containing acrylate monomer include the followings:
Rf-(CH₂)₁₀OCOCH=CH₂
Rf-(CH₂)₁₀OCOC(CH₃)=CH₂
Rf-CH₂OCOCH=CH₂
Rf-CH₂OCOC(CH₃)=CH₂
Rf-(CH₂)₂OCOCH=CH₂
Rf-(CH₂)₂OCOC(CH₃)=CH₂
Rf-SO₂N(CH₃)(CH₂)₂OCOCH=CH₂
Rf-SO₂N(C₂H₅)(CH₂)₂OCOCH=CH₂
Rf-CH₂CH(OCOCH₃)CH₂OCOC(CH₃)=CH₂
Rf-CH₂CH(OH)CH₂OCOCH=CH₂

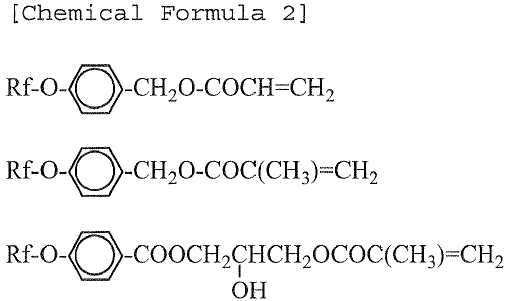

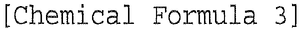

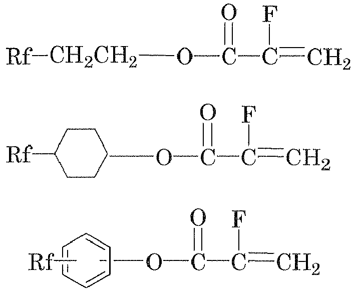

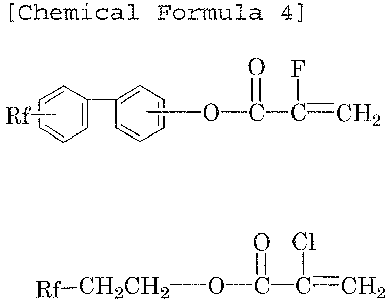

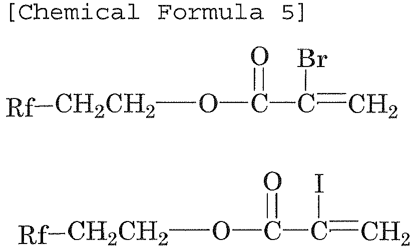

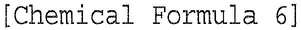

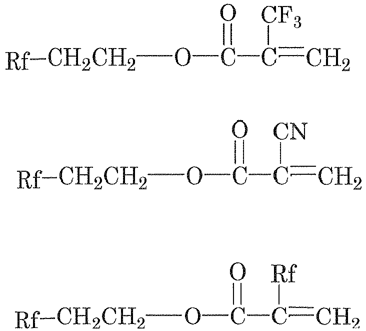

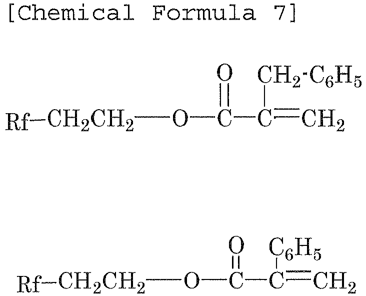

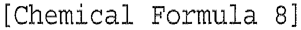

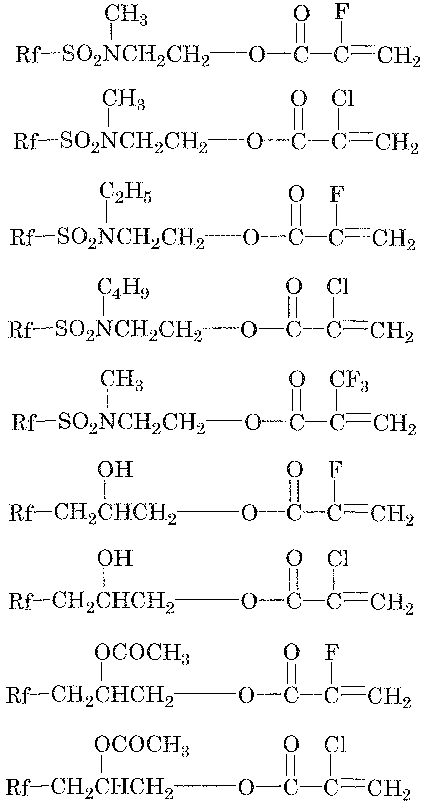

wherein Rf is a linear or branched fluoroalkyl group having 1 to 7 carbon atoms, a fluoroalkenyl group having 2 to 7 carbon atoms, or a fluoroether group having totally 1 to 200 repeating units selected from the group consisting of the repeating units: -C₃F₆O-, -C₂F₄O- and -CF₂O-.

The fluorine-free acrylate monomer (B) is a monomer which is free from an fluorine atom and is at least one monomer selected from (B1) a monomer having a cyclic hydrocarbon group and (B2) a monomer having a short chain hydrocarbon group. The monomer having a cyclic hydrocarbon group (B1) is a compound which has a cyclic hydrocarbon group and a polymerizable moiety. Examples of the cyclic hydrocarbon group include saturated or unsaturated, monocyclic group, polycyclic group and bridged ring group. The cyclic hydrocarbon group preferably has 4 to 20 carbon atoms. Examples of the cyclic hydrocarbon group include a cyclic aliphatic group having 4 to 20, particularly 5 to 12 carbon atoms, an aromatic group having 6 to 20 carbon atoms and an araliphatic group having 7 to 20 carbon atoms. The cyclic hydrocarbon group preferably has at most 15, for example, at most 10 carbon atoms. Specific examples of the cyclic hydrocarbon group include a cyclohexyl group, a t-butyl cyclohexyl group, a benzyl group, an isobornyl group, a dicyclopentanyl group and a dicyclopentenyl group. The polymerizable moiety is preferably a group having a carbon-carbon double bond. Examples of the polymerizable moiety include an acrylate group and a methacrylate group, and the methacrylate group is particularly preferable. In general, the cyclic hydrocarbon group directly bonds to the polymerizable moiety.

Examples of the monomer having a cyclic hydrocarbon group include cyclohexyl methacrylate, t-butylcyclohexyl methacrylate, benzyl methacrylate, isobornyl methacrylate, isobornyl acrylate, dicyclopentanyl methacrylate, dicyclopentanyl acrylate and dicyclopentenyl acrylate.

The monomer having a short chain hydrocarbon group (B2) is a compound which has a short chain hydrocarbon group and a polymerizable moiety. The short chain hydrocarbon group (B2) includes also a hydrogen atom. The short chain hydrocarbon group preferably has 0 to 6, particularly 0 to 4 (for example, 1 to 4) carbon atoms. Examples of the short chain hydrocarbon group preferably include a hydrogen atom, or a linear or branched aliphatic hydrocarbon group (such as an alkyl group) having 1 to 6, particularly 1 to 4 carbon atoms, in particular a methyl group, an ethyl group, a branched aliphatic hydrocarbon group having 3 to 6, particularly 3 to 4 carbon atoms, more particularly a branched propyl group (such as isopropyl group) and a branched butyl group (such as an isobutyl group and a t-butyl group) as well as a branched pentyl group and a branched hexyl group. The polymerizable moiety is preferably a group having a carbon-carbon double bond. Examples of the polymerizable moiety include an acrylate group and a methacrylate group, and the methacrylate group is particularly preferable. In general, the short chain hydrocarbon group directly bonds to the polymerizable moiety.

Specific examples of the monomer having a short chain hydrocarbon group (B2) include methacrylic acid, acrylic acid, methyl methacrylate, ethyl methacrylate, isopropyl methacrylate, isobutyl methacrylate, t-butyl methacrylate, neopentyl methacrylate, 3,3-dimethylbutyl methacrylate, 3,3-dimethyl-2-butyl- methacrylate.

The monomer constituting the fluorine-containing polymer may include, (C) a monomer having a silane group, in addition to the monomers (A) and (B). The monomer (C) is preferably a compound which has the silane group (particularly an end silane group) and a carbon-carbon double bond. The monomer having a silane group may be an end-capped silane coupling agent.

Specific examples of the monomer having a silane group include the followings:
CH₂=CHCO₂(CH₂)₃Si(OCH₃)₃,
CH₂=CHCO₂(CH₂)₃Si(OC₂H₅)₃,
CH₂=C(CH₃)CO₂(CH₂)₃Si(OCH₃)₃,
(gamma-methacryloxypropyl trimethoxysilane)
CH₂=C(CH₃)CO₂(CH₂)₃Si(OC₂H₅)₃,
CH₂=CHCO₂(CH₂)₃SiCH₃(OC₂H₅)₂,
CH₂=C(CH₃)CO₂(CH₂)₃SiC₂H₅(OCH₃)₂,
CH₂=C(CH₃)CO₂(CH₂)₃Si(CH₃)₂(OC₂H₅),
CH₂=C(CH₃)CO₂(CH₂)₃Si(CH₃)₂OH,
CH₂=CHCO₂(CH₂)₃SiCH₃[ON(CH₃)C₂H₅]₂,
CH₂=C(CH₃)CO₂(CH₂)₃SiC₆H₅[ON(CH₃)C₂H₅]₂,
CH₂=CHSi(OCH₃)₃,
CH₂=CHSi(OC₂H₅)₃,
CH₂=CHSiCH₃(OCH₃)₂,
CH₂=CHSi(CH₃)₂(OC₂H₅),
CH₂=CHSi(CH₃)₂SiCH₃(OCH₃)₂,
CH₂=CHSiCH₃[ON(CH₃)C₂H₅]₂,
vinyltrichlorosilane, and
vinyltris(2-methoxyethoxy)silane.

The monomers constituting the fluorine-containing polymer may include (D) an other monomer (D) according to the necessity, in addition to the monomers (A), (B) and (C). The other monomer (D) is preferably a monomer which is free from both fluorine and silicon. Examples of the other monomer (D) include a monomer having a hydrocarbon group other than the monomers (B1) and (B2), ethylene, vinyl acetate, vinyl halide (for example, vinyl chloride), vinylidene halide (for example, vinylidene chloride), acrylonitrile, 2-hydroxyethyl (meth)acrylate, 2-hydroxypropyl (meth)acrylate, glycerol mono(meth)acrylate, polyethyleneglycol (meth)acrylate, polypropyleneglycol (meth)acrylate, methoxypolyethyleneglycol (meth)acrylate, methoxypolypropyleneglycol (meth)acrylate, tetrahydrofurfuryl (meth)acrylate, 3-chloro-2-hydroxypropyl (meth)acrylate, vinyl alkyl ketone, vinyl alkyl ether, isoprene, chloroprene and butadiene, but are not limited to these examples.

The weight-average molecular weight of the fluorine-containing polymer may be, for example, from 2,000 to 5,000,000, particularly from 3,000 to 5,000,000, especially from 10,000 to 1,000,000. The weight-average molecular weight of the fluorine-containing polymer was measured by GPC (gel permeation chromatography) (in terms of polystyrene).

The fluorine-containing polymer of the present invention may be constituted by a combination of the repeating units derived from the following monomers:
(1) monomer (A) + monomer (B)
(2) monomer (A) + monomer (B) + monomer (C)
(3) monomer (A) + monomer (B) + monomer (D)
(4) monomer (A) + monomer (B) + monomer (C) + monomer (D)
The monomer (B) may be either one or both of the cyclic hydrocarbon group (B1) and the short chain hydrocarbon group (B2) .

In the fluorine-containing polymer,
the amount of the monomer (B) may be from 1 to 300 parts by weight, for example, from 3 to 150 parts by weight, particularly from 5 to 100 parts by weight, especially from 30 to 100 parts by weight;
the amount of the monomer (C) may be from 0 to 20 parts by weight, for example from 1 to 10 parts by weight; and the amount of the monomer (D) may be from 0 to 50 parts by weight, for example, from 1 to 10 parts by weight,
based on 100 parts by weight of the monomer (A).
The amount of the monomer (B1) may be from 0 to 200 parts by weight, for example, from 1 to 100 parts by weight, particularly from 30 to 100 parts by weight and the amount of the monomer (B2) may be from 0 to 200 parts by weight, for example, from 1 to 50 parts by weight,
based on 100 parts by weight of the monomer (A).
When the amount of the monomer (B1) is as mentioned above, the solubility in petroleum solvent is higher. When the amounts of the monomers (A), (B1) and (B2) are as mentioned above, the water- and oil-repellency and soil resistant property are higher.

The fluorine-containing polymer of the present invention can be prepared by any of conventional polymerization methods. Conditions for polymerization reaction can be arbitrarily selected. Such polymerization methods include a solution polymerization, a suspension polymerization and an emulsion polymerization.

In a solution polymerization, it is possible to employ a method of dissolving a monomer in an organic solvent in the presence of a polymerization initiator, replacing the atmosphere by nitrogen and stirring the solution with heating at a temperature within a range from 50 to 120°C for 1 to 10 hours. Examples of the polymerization initiator include azobisisobutyronitrile, azobisisovaleronitrile, benzoyl peroxide, di-tert-butyl peroxide, lauryl peroxide, cumene hydroperoxide, t-butyl peroxypivalate and diisopropyl peroxydicarbonate. The polymerization initiator may be used in the amount within a range from 0.01 to 5 parts by weight based on 100 parts by weight of the monomer.

The organic solvent is inert to the monomers and dissolves the monomers. Examples of such organic solvent include pentane, hexane, heptane, octane, isooctane, cyclohexane, benzene, toluene, xylene, petroleum ether, commercially available petroleum solvent (for example, EXXSOL D40 and ISOPER E (manufactured by Exxon Mobil Corporation)), tetrahydrofuran, 1,4-dioxane, acetone, methyl ethyl ketone, methyl isobutyl ketone, methyl acetate, ethyl acetate, butyl acetate, t-butyl acetate, isopropyl alcohol, propyleneglycol methylether acetate, p-chlorobenzotrifluoride, 1,1,2,2-tetrachloroethane, 1,1,1-trichloroethane, trichloroethylene, perchloroethylene, tetrachlorodifluoroethane and trichlorotrifluoroethane. The organic solvent may be used in an amount within a range from 50 to 1,000 parts by weight, based on 100 parts by weight of the total of the monomer.

In an emulsion polymerization, there can be used a method of emulsifying monomers in water in the presence of a polymerization initiator and an emulsifying agent, replacing the atmosphere by nitrogen, and polymerizing with stirring, for example, at the temperature within the range from 50°C to 80°C for 1 hour to 10 hours. As the polymerization initiator, for example, water-soluble initiators (e.g., azobisisobutylamidine dihydrochloride, sodium peroxide, potassium persulfate and ammonium persulfate) and oil-soluble initiators (e.g., azobisisobutyronitrile, azobisisovaleronitrile, benzoyl peroxide, di-tert-butyl peroxide, lauryl peroxide, cumene hydroperoxide, t-butyl peroxypivalate and diisopropyl peroxydicarbonate) are used. The polymerization initiator may be used in an amount within the range from 0.01 to 5 parts by weight, based on 100 parts by weight of the monomer.

In the present invention, the treatment agent comprises (1) fluorine-containing polymer and (2) liquid medium, for example, organic solvent and/or water. The treatment agent may be in a form of a solution of a fluorine-containing polymer (a solution of an organic solvent or an aqueous solution) or a dispersion of a fluorine-containing polymer (in an organic solvent or in water). The treatment agent of the present invention is preferably in the form of a solution of the fluorine-containing polymer.
In the treatment agent, the amount of the fluorine-containing polymer is not limited and can be selected from a range wherein the polymer can evenly dissolve or disperse the monomers therein. For example, the amount of the fluorine-containing polymer may be within a range from 0.1 to 80% by weight, for example from 0.2 to 20% by weight, based on 100 parts by weight of the monomer.

The treatment agent of the present invention may contain (3) a silicon-containing compound, in addition to the fluorine-containing polymer (1) and the liquid medium (2).
The silicon-containing compound (3) is preferably a compound which has at least one siloxane linkage.

The silicon-containing compound (3) may be a compound which is represented by the general formula as follows: 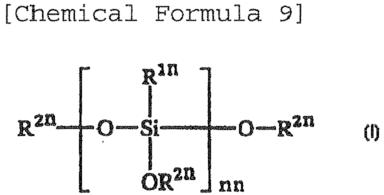 wherein R¹ⁿ is an alkyl group having 1 to 18 carbon atoms and, when nn is at least 2 or more, the R¹ⁿ groups may be the same or different. R²ⁿ is a hydrogen atom or an alkyl group having 1 to 5 carbon atoms and, when nn is 2 or more, the R²ⁿ groups may be the same or different; and nn is an integer of 1 to 20.

The alkyl group containing 1 to 18 carbon atoms as represented by R¹ⁿ (i.e., a saturated aliphatic hydrocarbon group) is not particularly restricted but includes, among others, a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group and an octadecyl group. These may be straight-chained or branched.

The alkyl group containing 1 to 5 carbon atoms as represented by R²ⁿ is not particularly restricted but includes, among others, methyl, ethyl, propyl, butyl and pentyl. These may be straight-chained or branched.
The symbol nn represents an integer of 1 to 20, for example an integer of 1 to 10.

As said silicon-containing compound (3), there may more specifically be mentioned, among others, methyltrimethoxysilane, ethyltrimethoxysilane, propyltrimethoxysilane, butyltrimethoxysilane, pentyltrimethoxysilane, hexyltrimethoxysilane, heptyltrimethoxysilane, octyltrimethoxysilane, nonyltrimethoxysilane, decyltrimethoxysilane, undecyltrimethoxysilane, dodecyltrimethoxysilane, tridecyltrimethoxysilane, tetradecyltrimethoxysilane, pentadecyltrimethoxysilane, hexadecyltrimethoxysilane, heptadecyltrimethoxysilane, octadecyltrimethoxysilane, methyltriethoxysilane, ethyltriethoxysilane, propyltriethoxysilane, butyltriethoxysilane, pentyltriethoxysilane, hexyltriethoxysilane, heptyltriethoxysilane, octyltriethoxysilane, nonyltriethoxysilane, decyltriethoxysilane, undecyltriethoxysilane, dodecyltriethoxysilane, tridecyltriethoxysilane, tetradecyltriethoxysilane, pentadecyltriethoxysilane, hexadecyltriethoxysilane, heptadecyltriethoxysilane, octadecyltriethoxysilane and so forth. Among them, methyltrimethoxysilane, methyltriethoxysilane, hexyltriethoxysilane and octyltriethoxysilane are preferred.

The above-mentioned silicon-containing compounds may be used also in their dimer form as the silicon-containing compound (3) in the present invention. As such, there may be mentioned those of general formula (I) in which nn is 2 or 3, for instance. Furthermore, those in which nn is up to 20 may be used as well.
The amount of the silicon-containing compound (3) may be from 0 to 200 parts by weight, for example, from 0 to 50 parts by weight, e.g., from 0.1 to 50 parts by weight, based on 100 parts by weight of the fluorine-containing polymer (1).

Further, the treatment agent may include, in addition to the above compounds (1) to (3), any of the other water-repellent agent, the other oil-repellent agent, drying rate adjuster, crosslinking agent, film-forming auxiliary, compatibilizing agent, surface active agent, antifreezing agent, viscosity adjusting agent, UV absorber, antioxidizing agent, pH adjuster, antifoam agent, feeling adjuster, slidability adjuster, antistatic agent, hydrophilizing agent, antibacterial agent, antiseptic agent, insect repellent, fragrance and flame retardant, according to the necessity.

The present invention provides a substrate with water- and oil-repellency and soil resistant property by applying the treatment agent to the substrate.

Examples of the substrate include masonry such as stone material, glass, ceramic products, fabric products, paper, wood, leather, metal and plastics. Examples of the masonry include stone, brick, concrete and tile. Examples of stone include natural stone (for example, marble and granite), and artificial stone.

The masonry is treated by treating (i.e. applying) the treatment agent to the substrate. The treatment agent is coated in an amount from 0.05 to 50 g/m², for example, from 0.1 to 20 g/m², preferably from 1 to 10 g/m² of the fluorine-containing polymer in the treatment agent. The coating may be conducted once or a plurality of times. The coating method may be any of brushing, spraying, rolling, dipping, coating using rags containing the treatment agent, or the like. Excess treatment agent may be wiped off according to the necessity. Then the treatment agent is dried to remove the liquid medium. The drying may be conducted at room temperature (20°C), and/or the baking may be conducted at 80°C to 250°C.
The term "treatment" means that a treatment agent is applied to a substrate by immersion, spraying, coating or the like. The treatment gives the result that a fluorine-containing polymer which is an active component of the treatment agent is adhered to surfaces of the substrate and/or penetrated into the internal parts of the substrate.

### EXAMPLES

Hereinafter, Examples and Comparative Examples are shown to specifically illustrate the present invention. However, each of these is merely a specific explanation, so that the present invention is not limited to them. In the followings, % is by weight unless otherwise specified.

Tests were conducted in the procedure as follows.

### Soil Resistance Test

A soil was put on a treated substrate, and droplets were left for 24 hours and wiped off with a paper towel. The visual evaluation was conducted according to the following criteria.
- 1 :: Deep stain, and oil droplet widely spread
- 2 :: Deep stain, and slight or no oil droplet spread
- 3 :: Moderate stain, and no spread
- 4 :: Slight stain
- 5 :: No stain.

### Solubility Test (Low Temperature)

As an evaluation of solubility, a solution obtained from the polymerization reaction was left in a bath at a low temperature (-15°C) for 24 hours, and the condition of the solution was visually evaluated.
- Poor =: insoluble matter formed
- Good =: uniform solution

### Solubility Test (Diluted)

The solution obtained from the polymerization reaction was diluted with EXXSOL D40 as a petroleum solvent at room temperature (20°C) to give a treatment liquid having a solid concentration of 3%. Then the condition of the treatment liquid was visually evaluated.
- Poor =: insoluble matter formed
- Good =: uniform solution

### Example 1

Into a 200 cc four-necked flask equipped with a stirrer, an inert gas inlet, a condenser and a thermometer, 13.0 g of CF₃CF₂(CF₂CF₂)₂CH₂CH₂OCOC (CH₃) =CH₂, 6.5 g of methyl methacrylate, 0.5 g of γ(gamma)-methacryloxypropyltrimethoxysilane (SZ6030, manufactured by Toray Dow Corning Silicone Corporation) and 54.0 g of butyl acetate were charged and heated to 70°C. Then, 1.4 g of t-butylperoxy pivalate (PERBUTYL PV, manufactured by NOF Corporation) was added and the polymerization reaction was conducted with stirring at 70°C for at least 12 hours. A gas chromatography revealed that a polymerization reaction conversion was at least 97%. The obtained polymer solution was diluted with butyl acetate to give a treatment liquid having a solid content of 3%. The monomer composition in the polymer was substantially the same as the charged monomer composition. The weight-average molecular weight of the polymer was 15,000 measured by GPC (gel permeation chromatography) (in terms of polystyrene).
A surface of each of polished granite and limestone (purchased from Inax Corp.) was coated with the treatment liquid (1 mL of the treatment liquid was applied to an area of 5 cm x 10 cm). After left at room temperature for 10 minutes, a superfluous treatment liquid was wiped off. After left at room temperature for 24 hours, a soil resistance test was conducted.
A solubility test was also conducted. The results are shown in Table 1.

### Example 2

The polymerization reaction was conducted in the same manner as in Example 1 except that CF₃CF₂(CF₂CF₂)₂CH₂CH₂OCO-C(CH₃)=CH₂ was replaced with CF₃CF₂(CF₂CF₂)₂CH₂CH₂OCOCCH=CH₂ to obtain a polymer solution. The composition of the monomers in the produced polymer was substantially the same as that of the charged monomers. The weight-average molecular weight (Mw) of the polymer was 16,000. The polymer solution was processed with butyl acetate to give a treatment liquid having a solid content of 3% as in Example 1, and then the soil resistance test was conducted The evaluation results are shown in Table 1.

### Examples 3 to 5

The polymerization reaction was conducted in the same manner as in Example 1 to obtain a polymer solution except that tert-butyl methacrylate in Example 3, cyclohexyl methacrylate in Example 4 or isobornyl methacrylate in Example 5 was used instead of methyl methacrylate. The composition of the monomers in the produced polymer was substantially the same as that of the charged monomers. The weight-average molecular weight (Mw) of the polymer was 14,000 (Example 3), 14,000 (Example 4) and 13,000 (Example 5), respectively. The polymer solution was processed with butyl acetate to give a treatment liquid having a solid content of 3% as in Example 1, and then the soil resistance test was conducted. The evaluation results are shown in Table 1.

### Example 6

Into the same apparatus as in Example 1, 17.5 g of CF₃CF₂(CF₂CF₂)₂CH₂CH₂OCOC(CH₃) =CH₂, 3.5 g of methacrylic acid and 54.0 g of acetone were charged and heated to 55°C. 1.4 g of PERBUTYL PV was added and the polymerization reaction was conducted with stirring at 55°C for at least 12 hours. The composition of the monomers in the produced polymer was substantially the same as that of the charged monomers. The weight-average molecular weight (Mw) of the polymer was 16,000. The polymer solution was processed with tetrahydrofuran to give a treatment liquid having a solid content of 3%, and then the soil resistance test was conducted. The evaluation results are shown in Table 1.

### Example 7

The polymerization reaction was conducted in the same manner as in Example 1 to obtain a polymer solution except that γ(gamma)-methacryloxy propyltrimethoxysilane was changed to stearyl acrylate. The composition of the monomers in the produced polymer was substantially the same as that of the charged monomers. The weight-average molecular weight (Mw) of the polymer was 20,000. The polymer solution was processed with butyl acetate to give a treatment liquid having a solid content of 3% as in Example 1, and then the soil resistance test was conducted. The evaluation results are shown in Table 1.

### Comparative Example 1

The soil resistance test was conducted in the same manner as Example 1 without coating granite and limestone used in Example 1 with the treatment agent. The evaluation results are shown in Table 1.

### Comparative Example 2

The polymerization reaction was conducted in the same manner as in Example 1 to obtain a polymer solution except that methyl methacrylate was changed to stearyl acrylate. The composition of the monomers in the produced polymer was substantially the same as that of the charged monomers. The weight-average molecular weight (Mw) of the polymer was 17,000. The polymer solution was processed with butyl acetate to give a treatment liquid having a solid content of 3% as in Example 1, and then the soil resistance test was conducted. The evaluation results are shown in Table 1.

### Comparative Examples 3 and 4

The polymerization reaction was conducted in the same manner as in Example 1 to obtain a polymer solution except that stearyl methacrylate in Comparative Example 3 or lauryl methacrylate in Comparative Example 4 was used instead of methyl methacrylate. The composition of the monomers in the produced polymer was substantially the same as that of the charged monomers. The weight-average molecular weight (Mw) of the polymer was 12,000 (Comparative Example 3) and 15,000 (Comparative Example 4). The polymer solution was processed with butyl acetate to give a treatment liquid having a solid content of 3% as in Example 1, and then the soil resistance test was conducted. The evaluation results are shown in Table 1.

### Example 8

Using the same apparatus as in Example 1, 11.0 g of CF₃CF₂(CF₂CF₂)₂CH₂CH₂OCOC(CH₃)=CH₂, 8.5 g of isobornyl methacrylate, 0.5 g of γ(gamma)-methacryloxypropyltrimethoxysilane (SZ6030, manufactured by Toray Dow Corning Silicone Corporation) and 54.0 g of butyl acetate were charged and heated to 70°C. Then, 1.4 g of PERBUTYL PV was added and the polymerization reaction was conducted with stirring at 70°C for at least 12 hours. A gas chromatography revealed that a polymerization reaction conversion was at least 97%. The composition of the monomers in the produced polymer was substantially the same as that of the charged monomers. The weight-average molecular weight (Mw) of the polymer was 13,000. The obtained polymerization solution was diluted with a petroleum-based solvent (EXXSOL D40, manufactured by Exxon Mobil Corporation) to give a treatment liquid having a solid concentration of 3%. The polymer solution was treated as in Example 1, and then the soil resistance test was conducted. The evaluation results are shown in Table 2. As the evaluation of the solubility, the solution obtained from the polymerization reaction was subjected to a solubility test at low temperature (-15°C) and a solubility test at room temperature being diluted with EXXSOL D40 as the petroleum-based solvent.
The evaluation results are shown in Table 2.

### Example 9

Using the same apparatus as in Example 1, 10.0 g of CF₃CF₂(CF₂CF₂)₂CH₂CH₂OCOC(CH₃)=CH₂, 8.5 g of isobornyl methacrylate, 1.0 g of methyl methacrylate, 0.5 g of γ(gamma)-methacryloxypropyltrimethoxysilane (SZ6030, manufactured by Toray Dow Corning Silicone Corporation) and 54.0 g of butyl acetate were charged and heated to 70°C. Then, 1.4 g of PERBUTYL PV was added and the polymerization reaction was conducted with stirring at 70°C for at least 12 hours. A gas chromatography revealed that a polymerization reaction conversion was at least 97%. The composition of the monomers in the produced polymer was substantially the same as that of the charged monomers. The weight-average molecular weight (Mw) of the polymer was 14,000. The obtained polymerization solution was diluted with a petroleum-based solvent (EXXSOL D40, manufactured by Exxon Mobil Corporation) to give a treatment liquid having a solid concentration of 3%. The polymer solution was treated as in Example 1, and then the soil resistance test was conducted. The evaluation results are shown in Table 2.

### Example 10

Using the same apparatus as in Example 1, 10.0 g of CF₃CF₂(CF₂CF₂)₂CH₂CH₂OCOC(CH₃)=CH₂, 8.5 g of isobornyl methacrylate, 1.5 g of methylmethacrylate and 54.0 g of butyl acetate were charged and heated to 70°C. Then, 1.4 g of PERBUTYL PV was added and the polymerization reaction was conducted with stirring at 70°C for at least 12 hours. A gas chromatography revealed that a polymerization reaction conversion was at least 97%. The composition of the monomers in the produced polymer was substantially the same as that of the charged monomers. The weight-average molecular weight (Mw) of the polymer was 15,000. The obtained polymerization solution was diluted with a petroleum-based solvent (EXXSOL D40, manufactured by Exxon Mobil Corporation) to give a treatment liquid having a solid concentration of 3%. The polymer solution was treated as in Example 1, and then the soil resistance test was conducted. The evaluation results are shown in Table 2.

### Example 11

The polymerization reaction was conducted in the same manner as in Example 8 to obtain a polymer solution except that isobornyl methacrylate was changed to dicyclopentanyl methacrylate. The composition of the monomers in the produced polymer was substantially the same as that of the charged monomers. The weight-average molecular weight (Mw) of the polymer was 14,000. The polymer solution was processed with a petroleum-based solvent (EXXSOL D40, manufactured by Exxon Mobil Corporation) to give a treatment liquid having a solid content of 3% as in Example 8, and then the soil resistance test was conducted. The evaluation results are shown in Table 2.

### Comparative Example 5

The polymer solution obtained in Comparative Example 2 was processed with a petroleum-based solvent (EXXSOL D40, manufactured by Exxon Mobil Corporation) to give a treatment liquid having a solid content of 3% as in Example 8, and then the soil resistance test was conducted. The evaluation results are shown in Table 2.

### Comparative Example 6

The polymer solution obtained in Comparative Example 3 was processed with a petroleum-based solvent (EXXSOL D40, manufactured by Exxon Mobil Corporation) to give a treatment liquid having a solid content of 3% as in Example 8, and then the soil resistance test was conducted. The evaluation results are shown in Table 2.

**[Table 1]**

| Evaluation of Solubility and Results of Soil Resistance Test | | | | | |
|---|---|---|---|---|---|
| | Solubility Test | Soil Resistance Test (granite / limestone) | | | |
| | Low temperature | Olive oil | Waste oil | Red wine | Coffee |
| Example 1 | Good | 5/5 | 5/5 | 5/5 | 5/5 |
| Example 2 | Good | 4/4 | 4/4 | 5/4 | 5/4 |
| Example 3 | Good | 5/4 | 5/3 | 5/4 | 5/3 |
| Example 4 | Good | 4/4 | 4/4 | 5/4 | 5/3 |
| Example 5 | Good | 5/5 | 5/4 | 5/4 | 5/5 |
| Example 6 | Good | 5/5 | 5/4 | 5/4 | 5/5 |
| Example 7 | Good | 4/4 | 4/4 | 5/4 | 5/5 |
| Com. Example 1 | - | 1/1 | 1/1 | 1/1 | 1/1 |
| Com. Example 2 | Poor | 2/1 | 3/1 | 3/2 | 2/2 |
| Com. Example 3 | Poor | 2/1 | 2/1 | 2/2 | 2/2 |
| Com. Example 4 | Good | 2/2 | 2/2 | 2/2 | 2/3 |

**[Table 2]**

| Evaluation of Solubility and Results of Soil Resistance Test | | | | | | |
|---|---|---|---|---|---|---|
| | Solubility Test | | Soil Resistance Test (granite / limestone) | | | |
| | Low temperature | Diluted | Olive oil | Waste oil | Red wine | Coffee |
| Example 8 | Good | Good | 5/5 | 5/4 | 5/3 | 5/4 |
| Example 9 | Good | Good | 5/5 | 5/5 | 5/4 | 5/5 |
| Example 10 | Good | Good | 4/4 | 4/4 | 5/4 | 5/5 |
| Example 11 | Good | Good | 5/4 | 5/4 | 4/3 | 5/4 |
| Com. Example 5 | Poor | Good | 2/1 | 3/1 | 3/2 | 2/2 |
| Com. Example 6 | Poor | Poor | 2/1 | 2/1 | 2/2 | 2/2 |

The present invention may be summarized by the following embodiments:
i) A fluorine-containing polymer for a masonry treatment, comprising:
   (A) repeating units derived from a fluorine-containing acrylate monomer and
   (B) repeating units derived from at least one fluorine-free acrylate monomer selected from the group consisting of (B1) a monomer having a cyclic hydrocarbon group and (B2) a monomer having a short chain hydrocarbon group.
ii) The fluorine-containing polymer according to i), wherein the fluorine-containing acrylate monomer (A) is a monomer comprising:
   at least one fluorine-containing group selected from the group consisting of a fluoroalkyl group, a fluoroalkenyl group and a fluoroether group; and
   an acrylate group represented by the formula:

      -O-CO-CX=CH₂

      wherein X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group.
iii) The fluorine-containing polymer according to i), wherein the fluorine-containing acrylate monomer (A) is a compound represented by the formula: 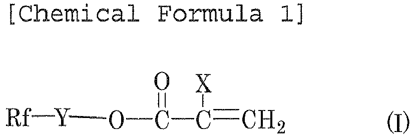 wherein
   X is a hydrogen atom, a methyl group, a fluorine atom, a chlorine atom, a bromine atom, an iodine atom, a CFX¹X² group (in which X¹ and X² are each a hydrogen atom, a fluorine atom, a chlorine atom, a bromine atom or an iodine atom), a cyano group, a linear or branched fluoroalkyl group having 1 to 21 carbon atoms, a substituted or unsubstituted benzyl group, or a substituted or unsubstituted phenyl group;
   Y is a direct bond, an aliphatic group having 1 to 10 carbon atoms which optionally has an oxygen atom, an aromatic, cycloaliphatic or araliphatic group having 6 to 10 carbon atoms which optionally has an oxygen atom, a -CH₂CH₂N(R¹)SO₂-group (in which R¹ is an alkyl group having 1 to 4 carbon atoms) or a -CH₂CH(OY¹)CH₂- group (in which Y¹ is a hydrogen atom or an acetyl group); and
   Rf is a linear or branched fluoroalkyl group having 1 to 7 carbon atoms, a fluoroalkenyl group having 2 to 7 carbon atoms, or a fluoroether group having totally 1 to 200 repeating units selected from the group consisting of the repeating units: -C₃F₆O-, -C₂F₄O- and -CF₂O-].
iv) The fluorine-containing polymer according to iii), wherein Rf in the fluorine-containing acrylate monomer (A) is a fluoroalkyl group having 2 to 6 carbon atoms or a fluoroalkenyl group having 3 to 6 carbon atoms.
v) The fluorine-containing polymer according to iv), wherein Rf in the fluorine-containing acrylate monomer (A) is a fluoroalkyl group having 6 carbon atoms.
vi) The fluorine-containing polymer according to any one of i) to v), wherein the monomer having a cyclic hydrocarbon group (B1) is a (meth)acrylate having a cyclic hydrocarbon group selected from the group consisting of a monocyclic group, a polycyclic group and a bridged ring group.
vii) The fluorine-containing polymer according to vi), wherein the monomer having a cyclic hydrocarbon group (B1) is a (meth)acrylate having a cyclic hydrocarbon group which comprises a bridged ring group.
viii) The fluorine-containing polymer according to any one of i) to vii), wherein the monomer having a short chain hydrocarbon group (B2) is a (meth)acrylate having a hydrogen or a short chain hydrocarbon group having at most 4 carbon atoms.
ix) The fluorine-containing polymer according to viii), wherein the short chain hydrocarbon group in the monomer having a short chain hydrocarbon group (B2) is a hydrogen or an aliphatic hydrocarbon group having 1 to 4 carbon atoms.
x) The fluorine-containing polymer according to any one of i) to ix), comprising repeating units derived from the fluorine-containing acrylate monomer (A), the monomer having a cyclic hydrocarbon group (B1) and/or the monomer having a short chain hydrocarbon group (B2), and (C) a monomer having silane group.
xi) The fluorine-containing polymer according to any one of i) to x), wherein, in the fluorine-containing polymer, the amount of the monomer (B) is from 1 to 300 parts by weight, and the amount of the optionally present monomer (C) is from 0 to 20 parts by weight, based on 100 parts by weight of the monomer (A).
xii) The fluorine-containing polymer according to any one of i) to xi), wherein the monomer (B) consists of the monomer having a cyclic hydrocarbon group (B1) or the monomer (B) consists of both the monomer having a cyclic hydrocarbon group (B1) and the monomer having a short chain hydrocarbon group (B2).
xiii) A treatment agent for masonry comprising (1) the fluorine-containing polymer according to any one of i) to xii) and (2) a liquid medium.
xiv) The treatment agent according to xiii), wherein the liquid medium is an organic solvent.
xv) The treatment agent according to xiii), which is a solution.
xvi) The treatment agent according to xiii), comprising the fluorine-containing polymer (1), the liquid medium (2), and (3) a silicon-containing compound.
xvii) The treatment agent according to any one of xiii) to xvi), which is used for treating a masonry.
xviii) A method of treating a masonry, comprising treating the masonry with the treatment agent according to xvii).
xix) The method according to xviii), which comprises applying the treatment agent to the masonry and then removing the liquid medium.
xx) A masonry produced by the method according to xviii) or xix).

## Claims

1. A treatment agent for masonry comprising
(1) a fluorine-containing polymer comprising:
(A) repeating units derived from a fluorine-containing acrylate monomer of the formula:
Rf-Y-O-C(=O)-CX=CH₂
wherein
X is H, methyl, F, Cl, Br, I, CFX¹X² (in which X¹ and X² are each H, F, Cl, Br or I), cyano, linear or branched C₁₋₂₁-fluoroalkyl or optionally substituted benzyl or phenyl;
Y is a direct bond, a C₁₋₁₀-aliphatic group optionally having an oxygen atom, a C₆₋₁₀-aromatic, -cycloaliphatic or -araliphatic group optionally having an oxygen atom, -CH₂CH₂N(R¹)SO₂- (in which R¹ is C₁₋₄-alkyl) or -CH₂CH(OY¹)CH₂- (in which Y¹ is H or acetyl); and
Rf is linear or branched C₁₋₇-fluoroalkyl, C₂₋₇-fluoroalkenyl, or a fluoroether group having a total of 1-200 repeating units selected from -C₃F₆O-, -C₂F₄O- and -CF₂O-; and
(B) repeating units derived from at least one fluorine-free acrylate monomer (B1) having a cyclic hydrocarbon group comprising a bridged ring group; and
(2) a liquid medium.

2. The treatment agent of claim 1, wherein in the polymer (1) Rf is C₂₋₆-fluoro alkyl or C₃₋₆-fluoroalkenyl.

3. The treatment agent of claim 2, wherein in the polymer (1) Rf is C₆-fluoroalkyl.

4. The treatment agent of any of claims 1-3, wherein in the polymer (1) monomer (B1) is a (meth)acrylate having a cyclic hydrocarbon group which comprises a bridged ring group.

5. The treatment agent of any of claims 1-4, wherein the polymer (1) further comprises repeating units derived from (C) a monomer having silane group.

6. The treatment agent of any of claims 1-5, wherein in the polymer (1) the amount of units derived from monomer (B) is 1-300 parts by weight (pbw), and the amount of units derived from monomer (C) is 0-20 pbw, based on 100 pbw of units derived from monomer (A).

7. The treatment agent of any of claims 1-6, wherein the liquid medium (2) is an organic solvent.

8. The treatment agent of any of claims 1-7, which is a solution.

9. The treatment agent of any of claims 1-8, which further comprises a silicon-containing compound (3).

10. A method comprising treating masonry with the treatment agent of any of claims 1-9.

11. The method of claim 10, which comprises applying the treatment agent to the masonry and then removing the liquid medium.

12. Masonry produced by the method of claim 10 or 11.
